Europäisches Patentamt

European Patent Office

Office européen des brevets

(19)

(11) Veröffentlichungsnummer: **0 003 734**
**A1**

(12) # EUROPÄISCHE PATENTANMELDUNG

(21) Anmeldenummer: 78101436.0

(22) Anmeldetag: 22.11.78

(51) Int. Cl.²: **B 07 B 7/01**
**B 65 G 53/46**

(30) Priorität: 22.02.78 DE 2807594

(43) Veröffentlichungstag der Anmeldung:
05.09.79 Patentblatt 79/18

(84) Benannte Vertragsstaaten:
BE FR GB

(71) Anmelder: Polysius AG
Graf-Galen-Strasse 17
D-4720 Beckum(DE)

(72) Erfinder: Heinemann, Otto
Galileistrasse 8
D-4722 Ennigerloh(DE)

(72) Erfinder: Milewski, Günter
Bergstrasse 2
D-4722 Ennigerloh(DE)

(72) Erfinder: Schössler, Werner
Zeppelinstrasse 22
D-4730 Ahlen(DE)

(74) Vertreter: Tetzner, Volkmar, Dr.-Ing. Dr. jur.
Van-Gogh-Strasse 3
D-8000 München 71(DE)

(54) Vorrichtung zur Abscheidung von Fremdkörpern aus einem Feingut-Förderstrom.

(57) Die Erfindung betrifft eine Vorrichtung zur Abscheidung von Fremdkörpern aus einem Feingut-Förderstrom. Dabei enthält ein als Drehventil ausgebildetes Verschlußorgan zugleich den belüftbaren Abscheideraum, der in einer ersten Drehstellung in Verbindung mit dem Förderweg und in einer zweiten Drehstellung in Verbindung mit einer Austragsöffnung steht. Dadurch wird bei einfacher Bauweise und geringer Bauhöhe ein zuverlässiger Austrag der abgeschiedenen Fremdkörper ermöglicht.

FIG.1

EP 0 003 734 A1

- 1 -

Polysius AG, Beckum
==================

Vorrichtung zur Abscheidung von Fremdkörpern
aus einem Feingut-Förderstrom

Die Erfindung betrifft eine Vorrichtung zur Abscheidung von Fremdkörpern aus einem Feingut-Förderstrom, enthaltend einen an den Förderweg angeschlossenen Abscheider mit einem zur Aufnahme der abgeschiedenen Fremdkörper dienenden, belüftbaren Abscheideraum sowie mit einem zum Austrag der abgeschiedenen
Fremdkörper aus dem Abscheideraum dienenden, beweglichen Verschlußorgan.

Aus dem Förderweg feinkörniger Schüttgüter, beispielsweise aus Luftförderrinnen, Förderschnecken
und dergleichen, müssen vielfach im Feingutstrom mitgeführte Fremdkörper (insbesondere größere und spezifisch schwerere Stücke) abgeschieden werden.

Es ist zu diesem Zweck bekannt, in den Förderweg
seitenbelüftete Trichter einzubauen. Die spezifisch
schwereren Fremdkörper sinken hierbei auf den Boden
des Trichters ab, während der Transport des Feingutes
- durch die Belüftung des Trichters unterstützt -
über dem Trichter im wesentlichen ungestört weiterläuft.

Das wesentliche Problem besteht bei derartigen
Vorrichtungen im Austragen der sich auf dem Boden
des Trichters ansammelnden Fremdkörper. Üblicherweise werden die erläuterten Trichter mit einer
Klappe versehen, die von Zeit zu Zeit entfernt wird,
wobei jedoch der ganze Fördervorgang kurzfristig
unterbrochen werden muß. Es ist weiterhin auch bekannt,
unterhalb des Trichters einen Schieber anzubringen,
an dessen Unterseite eine Schurre angeschlossen ist,
deren freies Ende durch einen weiteren Schieber verschlossen ist. Mit einer solchen Anordnung können
zwar während des Betriebes Fremdkörper ausgeschleust
werden, doch wird dabei - durch die Größe der Schurre
bedingt - meist auch eine beträchtliche Menge Feingut
mit ausgeschleust. Meist läßt sich ferner auch ein
kurzzeitiges Stocken des Fördervorganges nicht vermeiden. Nachteilig ist schließlich die beträchtliche
Bauhöhe dieser Vorrichtung sowie die Schwierigkeit,
den oberen Schieber bei vollgelaufener Schurre zu
schließen.

Der Erfindung liegt die Aufgabe zugrunde, unter
Vermeidung der Mängel der bekannten Ausführungen eine
Vorrichtung der eingangs genannten Art so auszubilden,
daß bei einfacher Bauweise und geringer Bauhöhe ein
einfacher und zuverlässiger Austrag der abgeschiedenen
Fremdkörper möglich ist, ohne daß hierbei die Weiterförderung des Feingutstromes beeinträchtigt wird.

Diese Aufgabe wird erfindungsgemäß dadurch gelöst,
daß das als Drehventil ausgebildete Verschlußorgan
zugleich den belüftbaren Abscheideraum enthält, der
in einer ersten Drehstellung in Verbindung mit dem
Förderweg und in einer zweiten Drehstellung in Verbindung mit einer Austragsöffnung steht.

Bei der erfindungsgemäßen Vorrichtung ist somit
das Verschlußorgan, das während des Austragens der
abgeschiedenen Fremdkörper die Verbindung des Abscheideraumes zum Förderweg unterbricht, mit dem Abscheideraum zu einem einzigen drehbaren Bauteil kombiniert.
Dadurch ergibt sich ein denkbar einfacher Aufbau und
eine besonders zuverlässige Betriebsweise der Vorrichtung. Die Ausgestaltung dieses Bauelementes als Drehventil gibt ferner die Möglichkeit, auf besonders einfache Weise auch in der Schließstellung (in der der
Abscheideraum vom Förderweg abgesperrt ist und nach
außen entleert wird) die Anschlußstelle des Abscheiders an den Förderweg weiter zu belüften.

Diese und zahlreiche weitere Merkmale der Erfindung
sind Gegenstand der Unteransprüche und werden in Verbindung mit der Beschreibung einiger Ausführungsbeispiele näher erläutert.

In der Zeichnung zeigen

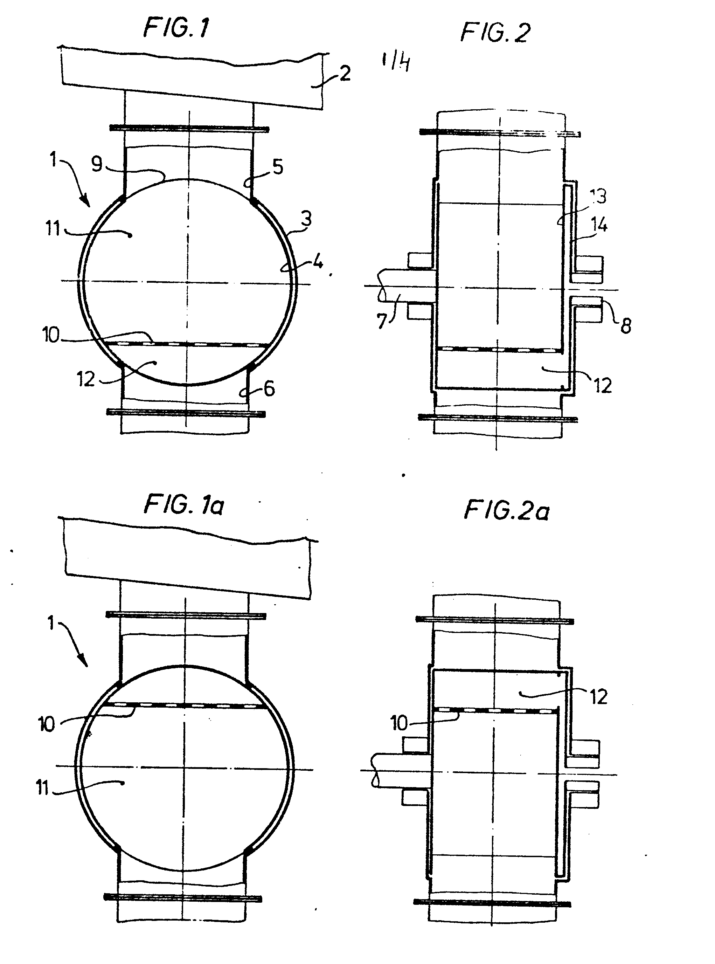

Fig.1 und 2    Querschnitt und Längsschnitt durch ein
               erstes Ausführungsbeispiel der Erfindung
               (in der ersten Drehstellung, in der der
               Abscheideraum mit dem Förderweg in Ver-
               bindung steht),

| | |
|---|---|
| Fig.1a und 2a | Querschnitt und Längsschnitt durch die Vorrichtung gemäß Fig.1 und 2 in der zweiten Drehstellung (in der der Abscheideraum mit einer Austragsöffnung in Verbindung steht); |
| Fig.3 und 4 | Querschnitt und Längsschnitt durch ein weiteres Ausführungsbeispiel der Erfindung in der ersten Drehstellung; |
| Fig.3a und 4a | Querschnitt und Längsschnitt durch die Vorrichtung gemäß den Fig.3 und 4 in der zweiten Drehstellung; |
| Fig.5, 5a und 5b | Stirnansichten des zweiten Ausführungsbeispieles, wobei Fig.5 die Drehstellung gemäß den Fig.3 und 4 zeigt; |
| Fig.5a | die Drehstellung entsprechend den Fig. 3a und 4a und Fig.5b eine Zwischenstellung; |
| Fig.6 und 7 | Querschnitt und Längsschnitt durch ein drittes Ausführungsbeispiel der Erfindung. |

Das in den Fig.1, 1a, 2 und 2a dargestellte erste Ausführungsbeispiel der Erfindung zeigt einen Abscheider 1, der an einen nicht näher veranschaulichten Feingut-Förderweg 2 (beispielsweise eine Luftförderrinne) angeschlossen ist. Der Abscheider 1 enthält ein feststehendes Gehäuse 3

- 5 -

mit zylindrischer Innenwand und eine in diesem Gehäuse 3 drehbare Trommel 4.

Das Gehäuse 3 weist in seinem oberen Bereich eine an den Förderweg 2 angeschlossene Guteintrittsöffnung 5 und im unteren Bereich eine Gutaustragsöffnung 6 auf.

Die mit Lagerzapfen 7, 8 im Gehäuse 3 gelagerte Trommel 4 besitzt in ihrem Mantel eine Gutdurchtrittsöffnung 9 und in ihrem Innenraum - der Gutdurchtrittsöffnung 9 diametral gegenüberliegend - einen belüftbaren Boden 10. Der Trommelmantel ist im übrigen - mit Ausnahme der Gutdurchtrittsöffnung 9 - bei diesem Ausführungsbeispiel geschlossen ausgebildet.

Durch den belüftbaren Boden 10 wird der Innenraum der Trommel 4 in einen zur Aufnahme der abgeschiedenen Fremdkörper bestimmten Abscheideraum 11 und eine Belüftungskammer 12 unterteilt.

Die rechte Stirnseite (vgl. Fig.2) der Trommel 4 ist doppelwandig ausgebildet. Der zwischen diesen Stirnwänden 13 und 14 vorhandene Raum ist einerseits über den hohl ausgebildeten Lagerzapfen 8 an eine (nicht dargestellte) Druckluftquelle angeschlossen und steht andererseits mit der vom Boden 10 begrenzten Belüftungskammer 12 in Verbindung.

Die Funktion der Vorrichtung gemäß den Fig.1 bis 2a ist folgendermaßen:

Befindet sich die Trommel 4 in ihrer in den Fig.1
und 2 veranschaulichten ersten Drehstellung, so steht
der über den Boden 10 belüftete Abscheideraum 11 in
Verbindung mit dem Förderweg 2. Aus dem Feingut-Förderstrom, der diesen Förderweg 2 durchsetzt, fallen
die größeren und spezifisch schwereren Fremdkörper
nach unten in den Abscheideraum 11 und sammeln sich
dort auf dem belüfteten Boden 10 an. An den Fremdkörpern etwa anhaftende Feingutteilchen werden durch
den über den Boden 10 zugeführten Luftstrom aus dem
Abscheideraum 11 nach oben ausgetragen. Von Zeit zu
Zeit - oder auch kontinuierlich - wird die Trommel 4
gedreht, so daß sie in ihre in den Fig.1a und 2a veranschaulichte zweite Drehstellung gelangt. In dieser
Drehstellung steht die Gutdurchtrittsöffnung 9 der
Trommel mit der Gutaustragsöffnung 6 des Gehäuses
in Verbindung, so daß die abgeschiedenen Fremdkörper
aus dem Abscheideraum 11 nach unten ausfallen. In dieser
Zeit ist die Guteintrittsöffnung 5 des Gehäuses durch
den Mantel der Trommel 4 verschlossen; während dieser
Zeit etwa aus dem Feingut-Förderstrom ausfallende
Fremdkörper sammeln sich daher auf dem Trommelmantel
an und fallen dann, wenn bei der weiteren Drehung
die Gutdurchtrittsöffnung 9 der Trommel 4 erneut in
Verbindung mit der Guteintrittsöffnung 5 des Gehäuses
3 kommt, in den Abscheideraum 11.

Bei diesem ersten Ausführungsbeispiel wird der Boden
10 zweckmäßig nur in der Auffangstellung des Abscheideraumes 11 (Fig.1 und 2) belüftet, während die Luftzufuhr zur Kammer 12 während des Entleerungsvorganges
(Fig.1a, 2a) zweckmäßig durch ein Ventil geschlossen wird, das bei der Drehbewegung der Trommel betätigt wird.

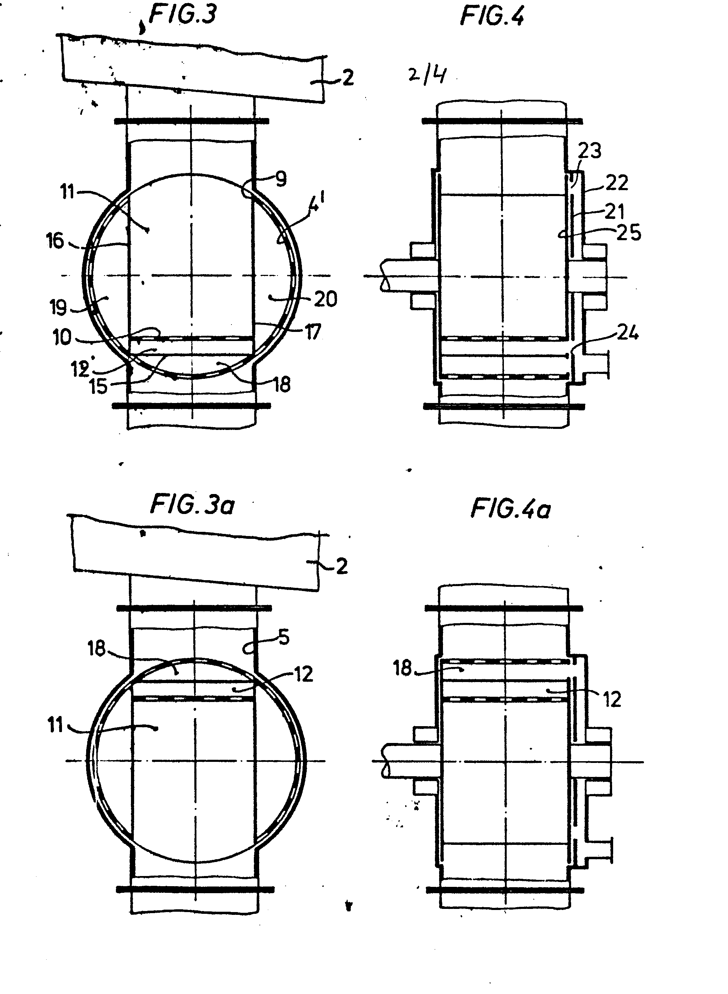

Bei dem in den Fig.3 bis 5b veranschaulichten zweiten Ausführungsbeispiel der Erfindung ist der Innenraum der Trommel 4' durch den belüftbaren Boden 10 sowie drei Zwischenwände 15, 16, 17 in den Abscheideraum 11, die Belüftungskammer 12 unter dem Belüftungsboden 10 sowie in drei weitere Belüftungskammern 18, 19 und 20 unterteilt.

Der Trommelmantel besitzt die bereits erwähnte Gutdurchtrittsöffnung 9 und ist im übrigen Bereich perforiert.

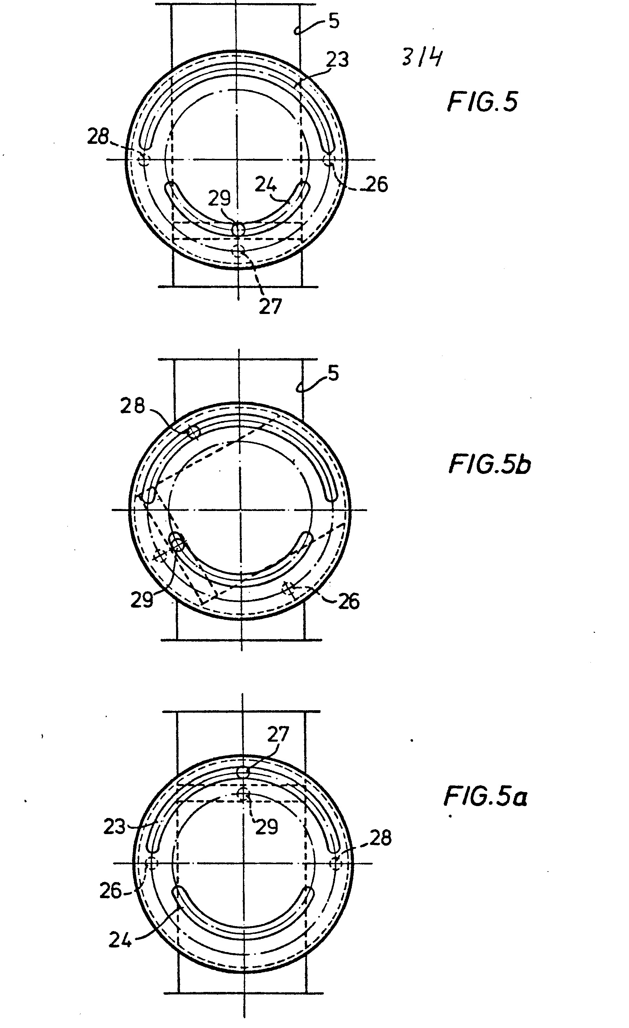

Die rechte Stirnseite des Gehäuses 3 ist doppelwandig ausgebildet, wobei der Zwischenraum zwischen den Stirnwänden 21, 22 zur Luftzuführ dient. In der Stirnwand 21 sind - wie insbesondere die Fig.5 bis 5b erkennen lassen - zwei kreisbogenförmige Luftdurchtrittsschlitze 23, 24 vorgesehen. Diese beiden Luftdurchtrittsschlitze 23, 24 sind auf etwas unterschiedlichem Radius angeordnet. In der benachbarten Stirnwand 25 der Trommel 4' sind - den Luftdurchtrittsschlitzen 23, 24 zugeordnet - vier Steuer-öffnungen 26 bis 29 vorgesehen, die mit den vier Belüftungskammern in Verbindung stehen.

Die Funktion dieses zweiten Ausführungsbeispieles der Erfindung ist folgendermaßen:

Befindet sich die Trommel 4' in der ersten Drehstellung, die in den Fig.3, 4 und 5 veranschaulicht ist, so wird über den Luftdurchtrittsschlitz 24 und die Steueröffnung 29 die Belüftungskammer 12 unter dem Boden 10 und damit der Abscheideraum 11 belüftet. Im Abscheideraum 11 sammeln sich infolgedessen in der bereits erläuterten Weise die aus dem Feingut-Förderstrom abgeschiedenen Fremdkörper, während Feingutteilchen nach oben ausgetragen werden. Während dieser Abscheidephase sind die drei übrigen Belüftungskammern 18, 19 und 20 von der Luftzufuhr abgeschnitten (vgl. die Lage der Steueröffnungen 26, 27, 28 gegenüber dem Luftdurchtrittsschlitz 23 in Fig.5).

Wird dagegen die Trommel 4' in die entgegengesetzte Drehstellung gedreht, in der in der bereits erläuterten Weise der Austrag der abgeschiedenen Fremdkörper aus dem Abscheideraum 11 nach unten erfolgt (vgl. Fig.3a, 4a und 5a), so ist in dieser Drehstellung die Luftzufuhr zur Belüftungskammer 12 unterbrochen, dagegen die Luftzufuhr zur Belüftungskammer 18 über die Steueröffnung 27 und den Luftdurchtrittsschlitz 23 hergestellt. Es wird infolgedessen der Teil des Trommelmantels, der sich zu dieser Zeit gerade unter der an den Förderweg angeschlossenen Guteintrittsöffnung 5 befindet, belüftet. Auf diese Weise wird auch während der Zeit, in der der Abscheideraum 11 nach unten entleert wird, die Luftzufuhr vom Abscheider zum Förderweg 2 nicht unterbrochen. Dadurch wird u.a. gewährleistet, daß in dieser Zeitspanne keine störende Materialanhäufung oder gar eine Verstopfung im Bereich der Abscheider-Anschlußstelle auftreten kann.

Fig.5b veranschaulicht die Belüftungsvorgänge zwischen den beiden erläuterten Drehstellungen: Hier wird der Abscheideraum 11 über die Steueröffnung 29 gerade noch etwas belüftet, während auch bereits der die Öffnung 5 teilweise bereits verschließende Teil des Trommelmantels über die Steueröffnung 28 belüftet wird. Während der Drehung der Trommel in die Entleerungsstellung verringert sich also
die Bodenbelüftung des Abscheideraumes, während sich die
Belüftung des Trommelmantels vergrößert. Dadurch bleibt
auch während der Trommelentleerung eine annähernd gleichmäßige Belüftung der über dem Abscheider liegenden Strecke
des Förderweges erhalten.

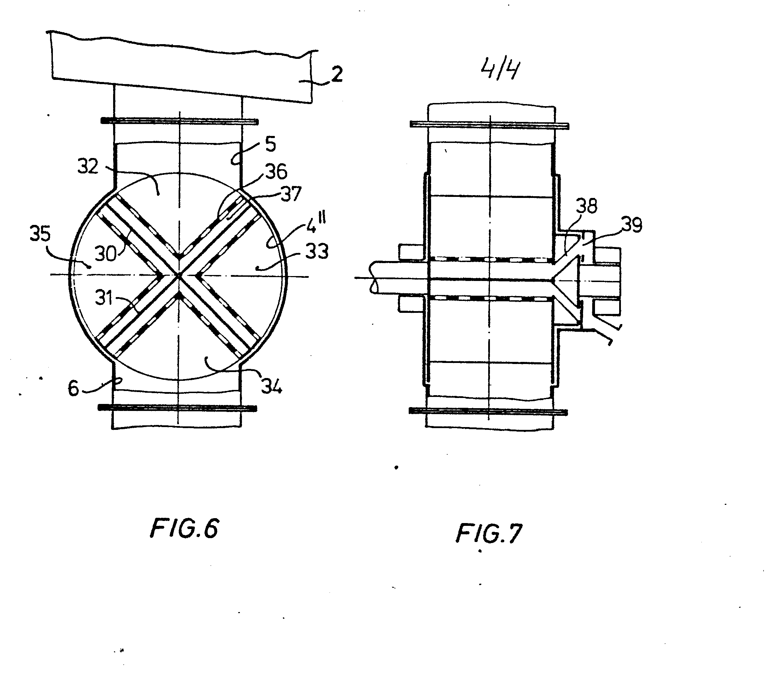

Die Fig.6 und 7 veranschaulichen schließlich ein Ausführungsbeispiel der Erfindung, bei dem die Trommel 4"
durch vier in 90°-Teilung angeordnete Zwischenwände 30,
31 in vier Abscheideräume 32 bis 35 unterteilt ist. Jeder
dieser Abscheideräume ist mit einem belüftbaren Boden
(z.B. Boden 36, gehörend zum Abscheideeaum 32) versehen.

Die unter den belüftbaren Böden vorgesehenen Belüftungskammern (z.B. Belüftungskammer 37 unter dem Boden 36) sind
durch Steuerkanäle (z.B.38) über eine im feststehenden
Gehäuse vorgesehene Steueröffnung 39 mit einer Druckluftquelle verbindbar. Die Anordnung wird vorzugsweise so
getroffen, daß jeweils nur der Belüftungsboden, der sich
gerade unter der Guteintrittsöffnung 5 befindet, über die
Steueröffnung 39 mit Luft versorgt wird.

Die Funktion dieses Ausführungsbeispieles dürfte aufgrund der obigen Erläuterungen ohne weiteres verständlich
sein: In dem Abscheideraum (z.B. 32), der sich gerade
unter der Guteintrittsöffnung 5 befindet, werden die
aus dem Feingut-Förderstrom ausfallenden Fremdkörper
abgeschieden. Zur gleichen Zeit wird der diametral gegenüberliegende Abscheideraum (z.B.34) über die Gutaustragsöffnung 6 entleert.

- 10 -

Auch bei diesem Ausführungsbeispiel besitzt das
drehbare Element (Trommel 4") eine Doppelfunktion:
Es stellt einerseits als Drehventil ausgebildetes
Verschlußorgan dar, das den Förderweg 2 im Bereich des Abscheiders nach außen hin abschließt, und es enthält zugleich einen bzw. mehrere Abscheideräume, die in einer
ersten Drehstellung in Verbindung mit dem Förderweg
und in einer zweiten Drehstellung in Verbindung mit
einer Austragsöffnung stehen.

Dr.-Ing. Dr. jur. VOLKMAR TETZNER

RECHTSANWALT und PATENTANWALT

Van-Gogh-Straße 3
8000 MÜNCHEN 71
Telefon: (089) 79 88 03
Telegramme: „Tetznerpatent München"
Telex: 5 212 282 pate d

P 4082/1

## Patentansprüche

1. Vorrichtung zur Abscheidung von Fremdkörpern aus
   einem Feingut-Förderstrom, enthaltend einen an
   den Förderweg angeschlossenen Abscheider mit einem
   zur Aufnahme der abgeschiedenen Fremdkörper dienenden, belüftbaren Abscheideraum sowie mit einem zum
   Austrag der abgeschiedenen Fremdkörper aus dem Abscheideraum dienenden, beweglichen Verschlußorgan,
   dadurch g e k e n n z e i c h n e t , daß das
   als Drehventil ausgebildete Verschlußorgan (z.B.4)
   zugleich den belüftbaren Abscheideraum (z.B.11)
   enthält, der in einer ersten Drehstellung in Ver-
   .bindung mit dem Förderweg (2) und in einer zweiter,
   Drehstellung in Verbindung mit einer Austragsöffnung
   (6) steht.

2. Vorrichtung nach Anspruch 1, dadurch gekennzeichnet, daß das Drehventil durch eine Trommel (z.B.4)
   gebildet wird, deren Mantel wenigstens eine Gutdurchtrittsöffnung (9) aufweist und in deren Innenraum wenigstens ein belüftbarer Boden (10) vorgesehen
   ist.

3. Vorrichtung nach Anspruch 2, dadurch gekennzeichnet,
   daß der Trommelmantel - mit Ausnahme der Gutdurchtrittsöffnung (9) - geschlossen ausgebildet ist.

4. Vorrichtung nach Anspruch 2, dadurch gekennzeichnet, daß wenigstens ein Teil des Trommelmantels perforiert ausgebildet ist, wobei der von diesem perforierten Trommelmantel begrenzte Teil des Trommelinnenraumes wenigstens eine gegenüber dem Abscheideraum (11) getrennte Belüftungskammer (18, 19, 20) bildet.

5. Vorrichtung nach Anspruch 2, dadurch gekennzeichnet, daß die Trommel (z.B.4) in einem Gehäuse (3) mit zylindrischer Innenwand drehbar ist, das in seinem oberen Bereich eine an den Förderweg 2 angeschlossene Guteintrittsöffnung 5 und im unteren Bereich eine Gutaustragsöffnung (6) aufweist.

6. Vorrichtung nach Anspruch 5, dadurch gekennzeichnet, daß die im Trommelmantel vorgesehene Gutdurchtrittsöffnung (9) dem belüftbaren Boden 10 diametral gegenüberliegt.

7. Vorrichtung nach Anspruch 4, dadurch gekennzeichnet, daß der über die Gutdurchtrittsöffnung (9) nach außen hin offene Abscheideraum (11) einerseits und die durch perforierte Teile des Trommelmantels begrenzten Belüftungskammern (18, 19, 20) andererseits gesondert belüftbar sind.

8. Vorrichtung nach Anspruch 7, dadurch gekennzeichnet, daß die Belüftung des Abscheideraumes (11) und der weiteren Belüftungskammern (18, 19, 20) über bei der Drehbewegung der Trommel (4') betätigte Steuerorgane gesteuert ist, vorzugsweise derart, daß sowohl der Abscheideraum (11) als auch die weiteren Belüftungskammern (18, 19, 20) jeweils nur während der Zeiten belüftet sind, in denen sie mit dem Förderweg 2
in Verbindung stehen.

9. Vorrichtung nach Anspruch 2, dadurch gekennzeichnet,
daß die Trommel (4") mehrere in gleichmäßiger Winkelteilung angeordnete Abscheideräume (32, 33, 34, 35)
mit je einem belüftbaren Boden (z.B.36) aufweist.

10. Vorrichtung nach Anspruch 9, dadurch gekennzeichnet,
daß jeweils nur der Boden (z.B. 36) des gerade mit dem
Förderweg (2) in Verbindung stehenden Abscheideraumes
(z.B.32) belüftet ist.

11. Vorrichtung nach Anspruch 2 oder 4, dadurch gekennzeichnet, daß die Luftzufuhr zum Abscheideraum und/oder
zu den weiteren Belüftungskammern von einer Stirnseite
der Trommel her erfolgt.

12. Vorrichtung nach den Ansprüchen 5 und 11, dadurch gekennzeichnet, daß in einer Stirnwand (21) des Gehäuses (3) wenigstens ein kreisbogenförmiger Luftdurchtrittsschlitz (23, 24) und in der benachbarten Stirnwand (25) der Trommel (4') wenigstens eine mit diesem
Schlitz während bestimmter Drehlagen der Trommel in
Verbindung stehende, die Luft dem zu belüftenden Raum
der Trommel zuführende Steueröffnung (26 bis 29) vorgesehen ist.

0003734

1/4

## FIG.1

## FIG.2

## FIG.1a

## FIG.2a

FIG.3

FIG.4

FIG.3a

FIG.4a

0003734

2/4

FIG.5

FIG.5b

FIG.5a

FIG.6

FIG.7

0003734

| | **EINSCHLÄGIGE DOKUMENTE** | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | DE - A - 976 838 (FULLER CY) <br> * Seite 1, Zeilen 1-5; Seite 1, Zeile 17 bis Seite 2, Zeile 15; Seite 2, Zeilen 93-96; Seite 3, Zeilen 19-40; Abbildungen 3,4 * <br><br> -- <br><br> GB - A - 1 217 543 (VOGT) <br> * Seite 3, Zeile 114 bis Seite 5, Zeile 8; Abbildungen 5,6 * <br><br> ----- | 1-3,5, 6,11 <br><br><br><br><br> 1,2,5, 7-10, 12 | B 07 B 7/01 <br> B 05 G 53/46 <br><br><br><br><br><br> RECHERCHIERTE SACHGEBIETE (Int. Cl.²) <br><br> B 07 B 7/00 <br> 9/00 <br> 4/00 <br> 11/00 <br> B 65 G 53/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-05-1979 | LAPEYRONNE |

EPA form 1503.1   06.78